# EUROPEAN PATENT APPLICATION

(11) **EP 3 825 763 A1**
(43) Date of publication of application: **26.05.2021**
(21) Application number: 18926659.6
(22) Date of filing: 18.07.2018
(51) Int. Cl.: G03B 13/36, H04N 5/232, G06F 3/0484

(54) **IMAGE PHOTOGRAPHING METHOD AND UNMANNED AERIAL VEHICLE**

(71) Applicant: SZ DJI Technology Co., Ltd., Shenzhen, Guangdong 518057 (CN)
(72) Inventor: LI, Yang, Shenzhen, Guangdong 518057 (CN)
(74) Representative: Goddar, Heinz J.
(86) International application number: PCT/CN2018/096136
(87) International publication number: WO 2020/014892

(57) **Abstract**

The present disclosure discloses an image capturing method and an unmanned aerial vehicle (UAV). The method includes receiving a recording command sent by a control terminal; acquiring a pre-set start focal length and a pre-set end focal length; changing from the start focal length to the end focal length, and recording an image during the process of changing the focal length. It can be seen that by implementing the method described in the present disclosure, difficulty of image capturing can be simplified, and photographing precision can also be improved.

## Description

### TECHNICAL FIELD

The present disclosure relates to the field of control and, more particularly, to an image capturing method and an unmanned aerial vehicle.

### BACKGROUND

Zoom burst uses a variable focal length feature of a zoom lens to rapidly change a focal length at a moment a shutter is pressed, so that an image produces strong "burst" radiation lines that spread from the center to surroundings. However, it is found in practical applications that, when using a camera for zoom burst, a user needs to manually change a focal length in a very short time, which results in great difficulty of image capturing.

### SUMMARY

The present disclosure discloses an image capturing method and an unmanned aerial vehicle (UAV), which can simplify the difficulty of image capturing.

In a first aspect, the present disclosure provides an image capturing method applied to a UAV. The method includes receiving a recording command sent by a control terminal; acquiring a pre-set start focal length and a pre-set end focal length; and changing from the start focal length to the end focal length, and recording an image during the process of changing the focal length.

It can be seen that by implementing the method described in the first aspect, the UAV can zoom automatically, and during a zoom process, record a burst image or images used to generate the burst image. Therefore, by implementing the method described in the first aspect, the difficulty of image capturing can be simplified, and photographing precision can also be improved. And recording burst images through the UAV can enrich photographing perspectives. For example, the UAV can record burst images from a bird's-eye view, which cannot be achieved with traditional cameras.

In a second aspect, the present disclosure provides an information setting method, applied to a control terminal. The information setting method includes acquiring a start focal length to be set and an end focal length to be set; and sending the start focal length and the end focal length to a UAV, so that the UAV can set the start focal length and the end focal length.

It can be seen that by implementing the method described in the second aspect, the start focal length and the end focal length can be flexibly set according to needs of a user, and the start focal length and the end focal length can be pre-set for the UAV through the control terminal, so that the UAV can zoom automatically according to the pre-set start focal length and the pre-set end focal length while photographing images, to simplify the difficulty of image capturing.

In a third aspect, the present disclosure provides a UAV. The UAV includes:
a communication unit, configured to receive a recording command sent by a control terminal; and
a processing unit, configured to acquire a pre-set start focal length and a pre-set end focal length,
the processing unit is also configured to change from the start focal length to the end focal length, and recording an image during the process of changing the focal length.

In a fourth aspect, the present disclosure provides a control terminal. The control terminal includes:
a processing unit, configured to acquire a start focal length to be set and an end focal length to be set; and
a communication unit, configured to send the start focal length and the end focal length to a UAV, so that the UAV can set the start focal length and the end focal length.

In a fifth aspect, the present disclosure provides a UAV. The UAV includes: a memory, a processor, a communication device, and a photographing device, in which:
the memory is configured to store program instructions; and
the processor calls the program instructions for:
receiving a recording command sent by a control terminal through the communication device;
acquiring a pre-set start focal length and a pre-set end focal length; and
changing from the start focal length to the end focal length, and recording an image during the process of changing the focal length through the photographing device.

In a sixth aspect, the present disclosure provides a control terminal. The control terminal includes: a memory, a processor, and a communication device, in which:
the memory is configured to store program instructions; and
the processor calls the program instructions for:
acquiring a start focal length to be set and an end focal length to be set; and
sending the start focal length and the end focal length to a UAV through the communication device, so that the UAV sets the start focal length and the end focal length.

Beneficial effects of the third aspect and the fifth aspect are the same as beneficial effects of the first aspect. For the beneficial effects of the third aspect and the fifth aspect, please refer to the beneficial effects of the first aspect for details, which will not be repeated here. Beneficial effects of the fourth aspect and the sixth aspect are the same as beneficial effects of the second aspect. For details, please refer to the beneficial effects of the second aspect, which will not be repeated here.

### BRIEF DESCRIPTION OF THE DRAWINGS

To more clearly illustrate the technical solutions in the embodiments of the present disclosure, the accompanying drawings needed to be used in the embodiments will be briefly described below. It is obvious that the accompanying drawings in the following description are only some embodiments of the present disclosure. For those having ordinary skills in the art, other drawings can be obtained according to these accompanying drawings without inventive efforts.
FIG. 1 is a schematic diagram of a system architecture provided by the embodiments of the present disclosure;
FIG. 2 to FIG. 7 are schematic flowcharts of an image capturing method provided by the embodiments of the present disclosure;
FIG. 8 is a schematic structural diagram of a UAV provided by the embodiments of the present disclosure;
FIG. 9 is a schematic structural diagram of a control terminal provided by the embodiments of the present disclosure;
FIG. 10 is a schematic structural diagram of another UAV provided by the embodiments of the present disclosure; and
FIG. 11 is a schematic structural diagram of another control terminal provided by the embodiments of the present disclosure.

### DETAILED DESCRIPTION OF THE EMBODIMENTS

To make objectives, technical solutions, and advantages of the present disclosure clearer, the technical solutions of the embodiments of the present disclosure will be described below with reference to the accompanying drawings.

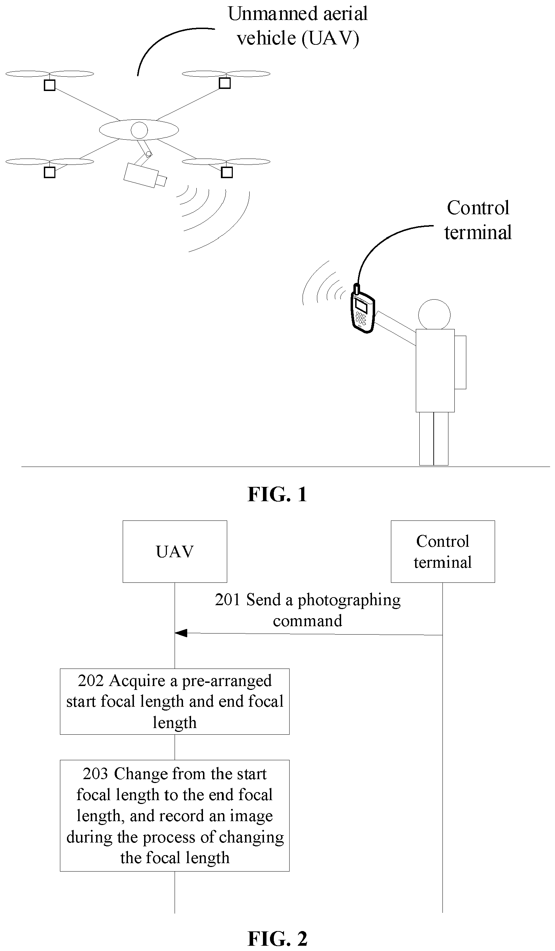

To clearly describe the solutions of the embodiments of the present disclosure, feasible business scenarios and system architecture of the embodiments of the present disclosure are described below with reference to FIG. 1.

FIG. 1 is a schematic diagram of a feasible system architecture provided by the embodiments of the present disclosure. A UAV system according to the embodiments of the present disclosure includes a UAV and a control terminal. In which, the control terminal is configured to control the UAV. The control terminal can be a mobile phone, a tablet computer, a remote control or other wearable devices (a watch or a bracelet), etc. It is worth mentioning that the control terminal has a display screen. FIG. 1 takes the control terminal being a mobile phone as an example. Optionally, the UAV may include a flying main body, a gimbal, and a camera device. The flying main body may include a plurality of rotor wings and rotor wing motors that drive the rotor wings to rotate, thereby providing power required for the UAV to fly. The camera device is mounted on the flying main body through the gimbal. The camera device is used for image or video photographing during a flight of the UAV, and may include but not limited to a multispectral imager, a hyperspectral imager, a visible light camera, an infrared camera, etc. The gimbal can be a multi-axis transmission and stabilization system, which can include multiple rotating shafts and gimbal motors. The gimbal motors can compensate a photographing angle of the camera device by adjusting rotation angles of the rotating shafts, and can prevent or reduce shaking of the camera device by setting an appropriate buffer mechanism. Of course, the camera device can be mounted directly or in other ways on the flying main body, which is not limited in the embodiments of the present disclosure.

It is understandable that the system architecture and the business scenarios described in the embodiments of the present disclosure are intended to illustrate the technical solutions according to the embodiments of the present disclosure more clearly, and do not constitute a limitation on the technical solutions provided by the embodiments of the present disclosure. Those having ordinary skill in the art can know that, with evolution of the system architecture and emergence of new business scenarios, the technical solutions provided by the embodiments of the present disclosure are equally applicable to similar technical problems.

A specific process of an image capturing method provided by the embodiments of the present disclosure will be further described below.

Please refer to FIG. 2, which is a schematic flowchart of an image capturing method disclosed in the embodiments of the present disclosure. As shown in FIG. 2, the image capturing method may include steps 201 to 203. In which:

In step 201, a control terminal sends a recording command to a UAV.

In step 202, the UAV acquires a pre-set start focal length and a pre-set end focal length.

Specifically, after receiving the recording command sent by the control terminal, the UAV acquires the pre-set start focal length and the pre-set end focal length.

Specifically, the UAV carries a zoom lens. The zoom lens is a camera lens that can change a focal length within a certain range, so as to obtain different widths of field of view, images of different sizes, and different scene ranges. For example, a zoom range of the zoom lens can be from 4 mm to 1100 mm, from 10 mm to 1000 mm, or other zoom ranges.

In which, the start focal length may be smaller than the end focal length, or the end focal length may be smaller than the start focal length, which is not limited in the embodiments of the present disclosure.

As an optional embodiment, a focal length changing range of the start focal length and the end focal length is smaller than a maximum focal length changing range. For example, if a maximum zoom range of a zoom lens is from 4 mm to 1100 mm, a changing range between the start focal length and the end focal length can be from 4 to 500 mm. If the focal length changing range is too large during a process of image capturing, it will cause burst effect of images recorded to be too exaggerated.

As an optional embodiment, the start focal length and the end focal length may be pre-set by a manufacturer when the UAV leaves a factory. One set of start focal lengths and end focal lengths or multiple sets of start focal lengths and end focal lengths can be set at the factory. By implementing this embodiment, reasonable start focal lengths and end focal lengths can be set at the factory, so that a user does not need to manually set.

Optionally, when multiple sets of start focal lengths and end focal lengths are pre-set at the factory, and when the UAV receives the recording command sent by the control terminal, the UAV can automatically choose a set of start focal lengths and end focal lengths from the pre-set multiple sets of start focal lengths and end focal lengths according to pre-set rules, and change from the selected start focal length to the selected end focal length, and recording an image during the process of changing the focal length. By implementing this embodiment, suitable start focal lengths and end focal lengths can be automatically selected.

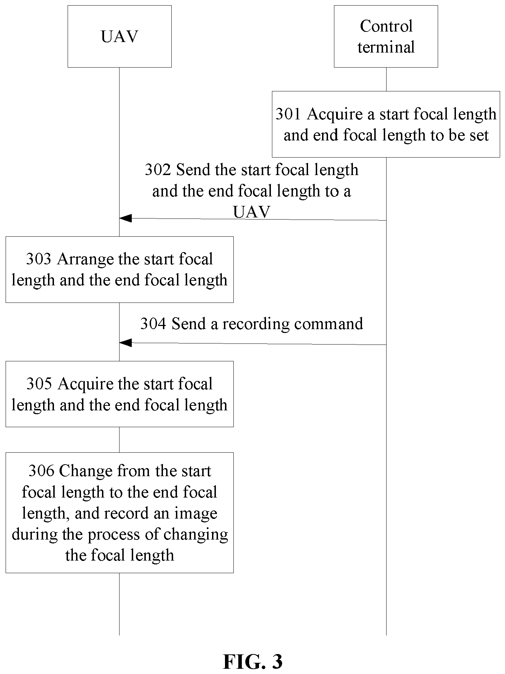

As an optional embodiment, the start focal length and the end focal length may be pre-set through the control terminal. As shown in FIG. 3, a control terminal can acquire a start focal length to be set and an end focal length to be set; the control terminal sends the start focal length and the end focal length to a UAV. Before the UAV receives a recording command sent by the control terminal, the UAV receives the start focal length and the end focal length sent by the control terminal, and sets the start focal length and the end focal length. By implementing this embodiment, the start focal length and the end focal length can be flexibly set according to needs of a user.

For example, the control terminal may have multiple sets of start focal lengths and end focal lengths for a user to choose, and the user may select a set of start focal lengths and end focal lengths in the control terminal. After acquiring a start focal length and an end focal length selected by the user, the control terminal sends the start focal length and the end focal length selected by the user to the UAV. The UAV sets the received start focal length and the received end focal length. Alternatively, the user can directly input a start focal length and an end focal length in the control terminal. After acquiring the start focal length and the end focal length input by the user, the control terminal sends the start focal length and the end focal length input by the user to the UAV. The UAV sets the received start focal length and the received end focal length. After receiving a recording command, the UAV can directly acquire the set start focal length and the set end focal length, and change from the start focal length to the end focal length, and recording an image during the process of changing the focal length.

In step 203, the UAV changes from the start focal length to the end focal length, and records an image during the process of changing the focal length.

Specifically, after acquiring the pre-set start focal length and the pre-set end focal length, the UAV changes from the start focal length to the end focal length, and records an image during the process of changing the focal length.

In which, the image taken by the UAV during the process of changing the focal length can be a burst image or an ordinary image. For example, the UAV can change from the start focal length to the end focal length within one exposure time, and record a burst image during the process of changing the focal length. A burst image means that a subject is relatively clear, and surrounding of the subject spreads out in all directions in radiation lines, making a viewer to feel that the subject is approaching or moving away from the viewer.

As another example, the UAV can perform multiple exposures to record multiple images during the process of changing the focal length, and the multiple images are used to generate a burst image. That is, multiple exposures are performed during the process of changing the focal length, and one image is recorded for each exposure. The UAV can send the multiple images to the control terminal, and the control terminal generates the burst image through post-processing, or the UAV can send the multiple images to other terminals, and the other terminals generate the burst image through post-processing.

As an optional embodiment, the UAV may acquire a pre-set focal length changing speed in advance; accordingly, the UAV changes from the start focal length to the end focal length according to the acquired focal length changing speed. By implementing this embodiment, a focal length can be changed at a uniform speed, so that burst lines of a burst image obtained are smoother.

Optionally, after receiving the recording command, the UAV may first acquire the pre-set start focal length and the pre-set end focal length, and then acquire the pre-set focal length changing speed. Alternatively, the pre-set focal length changing speed can be acquired first, and then the pre-set start focal length and the pre-set end focal length can be acquired. Or, the pre-set start focal length, the pre-set end focal length, and the pre-set focal length changing speed can be acquired at a same time.

Optionally, the focal length changing speed may be pre-set by a manufacturer when the UAV leaves a factory. One focal length changing speed or multiple focal length changing speeds can be set at the factory. By implementing this embodiment, reasonable focal length changing speeds can be set at the factory, so that a user does not need to manually set.

Optionally, when multiple focal length changing speeds are pre-set at the factory, and when the UAV receives the recording command sent by the control terminal, the UAV can automatically select a focal length changing speed from the multiple pre-set focal length changing speeds according to pre-set rules, and change from the start focal length to the end focal length according to the selected focal length changing speed, and recording an image during the process of changing the focal length. For example, a focal length changing speed can be selected from the multiple pre-set focal length changing speeds according to ambient light intensity. When the ambient light intensity is weak, a slower focal length changing speed is chosen. When the ambient light intensity is stronger, a faster focal length changing speed is chosen. By implementing this embodiment, an appropriate focal length changing speed can be automatically selected.

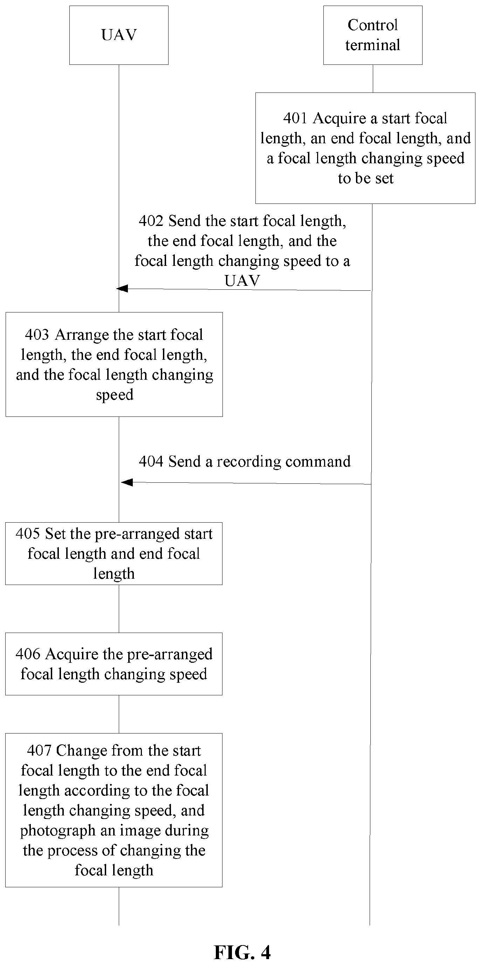

Optionally, the focal length changing speed is pre-set through the control terminal. For example, as shown in FIG. 4, a control terminal can acquire a start focal length to be set and an end focal length to be set; the control terminal sends the start focal length and the end focal length to a UAV. The UAV receives the start focal length and the end focal length sent by the control terminal, and sets the start focal length and the end focal length. The control terminal can also acquire a focal length changing speed to be set; and the control terminal sends the focal length changing speed to the UAV. The UAV receives the focal length changing speed sent by the control terminal, and sets the focal length changing speed. In which, the present disclosure does not limit an order in which the control terminal acquires and sends the start focal length, the end focal length, and the focal length changing speed. For example, the start focal length, the end focal length, and the focal length changing speed can be acquired and sent at a same time, and FIG. 4 takes acquiring and sending the start focal length, the end focal length, and the focal length changing speed at a same time as an example; or the start focal length and the end focal length are acquired and sent first, and then the focal length changing speed is acquired and sent; or, the focal length changing speed can be acquired and sent first, and then the start focal length and the end focal length can be acquired and sent. By implementing this embodiment, the focal length changing speed can be flexibly set according to needs of a user.

For example, the control terminal may have multiple focal length changing speeds and multiple sets of start focal lengths and end focal lengths for a user to choose. The user can select a focal length changing speed and a set of start focal lengths and end focal lengths in the control terminal. After acquiring the focal length changing speed, the start focal length, and the end focal length selected by the user, the control terminal sends the focal length changing speed, the start focal length, and the end focal length selected by the user to the UAV. The UAV sets the received focal length changing speed, the received start focal length, and the received end focal length. Alternatively, the user can also directly input a focal length changing speed, a start focal length, and an end focal length in the control terminal. After acquiring the focal length changing speed, the start focal length, and the end focal length, the control terminal sends the focal length changing speed, the start focal length, and the end focal length input by the user to the UAV. The UAV sets the received start focal length and the received end focal length. After receiving the recording command, the UAV can directly acquire the set focal length changing speed, the set start focal length, and the set end focal length, and change from the start focal length to the end focal length according to the focal length changing speed, and recording an image during the process of changing the focal length.

As an optional embodiment, before acquiring the pre-set start focal length and the pre-set end focal length, the UAV rotates a gimbal carrying a camera so that a framed object is in a middle position of a display screen of the control terminal. For example, a user can select a subject on the display screen of the control terminal and click a photographing button. After receiving the recording command, the UAV rotates the gimbal carrying the camera so that the framed object is in the middle of the display screen. The subject is kept in the middle of the screen, so that the subject can remain partially recognizable, which helps improve image quality.

As an optional embodiment, the UAV is in a hovering state during the process of changing the focal length. If the UAV is moving during the process of changing the focal length, the image quality of the photographed burst image will be blurred, or the image quality of the burst image generated later will be blurred. Therefore, by implementing this embodiment, it is beneficial to improve the image quality of the burst image.

As an optional embodiment, when the UAV is in the process of changing the focal length, after sending a remote-control flight operation instruction to the UAV, the control terminal will receive a prompt message sent by the UAV for prompting a termination of a photographing task. After the control terminal receives the prompt message, the control terminal can output the prompt message to prompt a user about the termination of the photographing task. Correspondingly, during the process of changing the focal length, if the UAV receives the remote-control flight operation instruction for the UAV, the UAV terminates the photographing task, and sends the prompt message for prompting the termination of the photographing task to the control terminal. If the UAV is moving during the process of changing the focal length, the image quality of the recorded burst image will be blurred, or the image quality of the burst image generated later will be blurred. Therefore, by implementing this embodiment, it is beneficial to improve the image quality of the burst image.

As an optional implementation, during the process of changing the focal length, if the UAV receives a remote-control flight operation instruction to the UAV, the UAV can also continue to record images, and then execute the remote-control flight operation instruction after the images are recorded. By implementing this embodiment, it is beneficial to improve the image quality of the burst image.

It can be seen that by implementing the method described in FIG. 2, the UAV can zoom automatically, and during the process of changing the focal length, record a burst image or images used to generate a burst image. Therefore, by implementing the method described in FIG. 2, the difficulty of image capturing can be simplified, and the photographing precision can also be improved. And recording burst images through the UAV can enrich photographing perspectives. For example, the UAV can record burst images from a bird's-eye view, which cannot be achieved with traditional cameras.

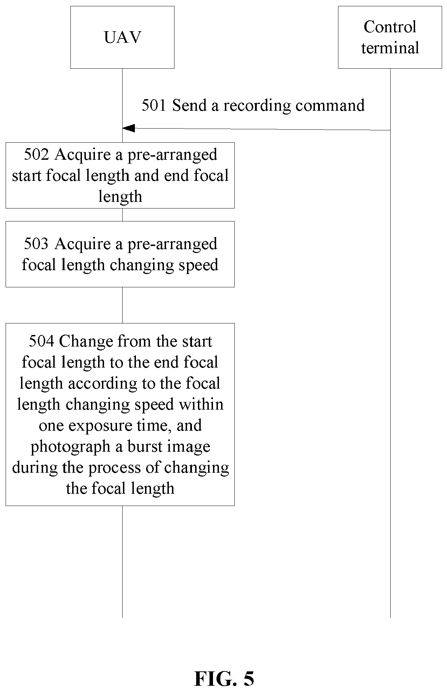

Please refer to FIG. 5, which is a schematic flowchart of another image capturing method disclosed in the embodiments of the present disclosure. As shown in FIG. 5, the image capturing method may include steps 501 to 504. In which:

In step 501, a control terminal sends a recording command to a UAV.

In step 502, the UAV acquires a pre-set start focal length and a pre-set end focal length.

Specifically, after receiving the recording command sent by the control terminal, the UAV acquires the pre-set start focal length and the pre-set end focal length.

In step 503, the UAV acquires a pre-set focal length changing speed.

Specifically, after receiving the recording command sent by the control terminal, the UAV acquires the pre-set focal length changing speed. In which, steps 502 and 503 are executed in no particular order. After the UAV receives the recording command sent by the control terminal, step 502 can be executed first, and then step 503 can be executed. Or step 503 can be executed first, then step 502 can be executed. Or steps 502 and 503 can be executed simultaneously.

For how the UAV pre-sets the start focal length, the end focal length, and the focal length changing speed, please refer to corresponding description of the above method embodiments, which will not be repeated here.

In step 504, the UAV changes from the start focal length to the end focal length according to the focal length changing speed within one exposure time, and records a burst image during the process of changing the focal length.

Optionally, the exposure time can be a safe shutter time or less than the safe shutter time. The safe shutter time is usually 1/30s or 1/60s. If the exposure time is longer than the safe shutter time, it is easy to make the image blurry due to shaking of the UAV.

As an optional embodiment, the exposure time is pre-set. In other words, after receiving the recording command sent by the control terminal, the UAV can acquire the pre-set exposure time, the pre-set start focal length, the pre-set end focal length, and the pre-set focal length changing speed.

In which, the present disclosure does not limit a time sequence in which the UAV acquires these four parameters. After acquiring the pre-set exposure time, the pre-set start focal length, the pre-set end focal length, and the pre-set focal length changing speed, the UAV changes from the start focal length to the end focal length within the exposure time according to the focal length changing speed, and records a burst image during the process of changing the focal length.

Optionally, the exposure time can be pre-set by a manufacturer when the UAV leaves a factory. One or more exposure times can be set at the factory. By implementing this embodiment, reasonable exposure times can be set at the factory, so that a user does not need to manually set. Optionally, when multiple exposure times are pre-set at the factory, and when the UAV receives the recording command sent by the control terminal, an exposure time can be automatically selected from the multiple pre-set exposure times according to pre-set rules. For example, one exposure time can be selected from the multiple pre-set exposure times according to ambient light intensity. When the ambient light intensity is weak, a longer exposure time is chosen. When the ambient light intensity is strong, a shorter exposure time is chosen. By implementing this embodiment, a suitable exposure time can be automatically selected.

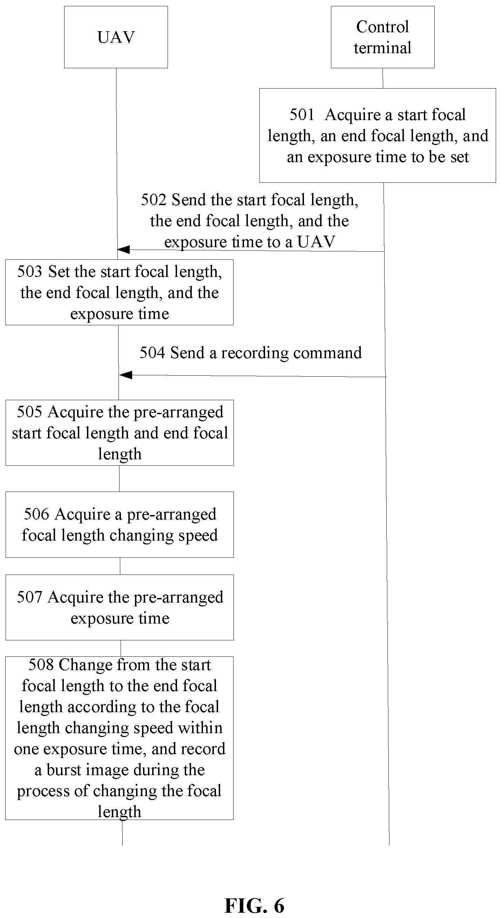

Optionally, the exposure time may be pre-set through the control terminal. For example, as shown in FIG. 6, a control terminal can acquire a start focal length to be set and an end focal length to be set; and the control terminal sends the start focal length and the end focal length to a UAV. The UAV receives the start focal length and the end focal length sent by the control terminal, and sets the start focal length and the end focal length. The control terminal can also acquire an exposure time to be set; and the control terminal sends the exposure time to the UAV. The UAV receives the exposure time sent by the control terminal and sets the exposure time. In which, the present disclosure does not limit an order in which the control terminal acquires and sends the start focal length, the end focal length, and the exposure time. By implementing this embodiment, the exposure time can be flexibly set according to needs of a user.

For example, the control terminal may have multiple exposure times and multiple sets of start focal lengths and end focal lengths for a user to choose, and the user may select an exposure time and a set of start focal lengths and end focal lengths in the control terminal. After acquiring the exposure time, the start focal length, and the end focal length selected by the user, the control terminal sends the exposure time, the start focal length, and the end focal length selected by the user to the UAV. The UAV sets the received exposure time, the received start focal length, and the received end focal length. Alternatively, the user can also directly input an exposure time, a start focal length, and an end focal length in the control terminal. After acquiring the exposure time, the start focal length, and the end focal length, the control terminal sends the exposure time, the start focal length, and the end focal length input by the user to the UAV. The UAV sets the received start focal length and the received end focal length. After receiving the recording command, the UAV can directly acquire the set exposure time, the set start focal length, and the set end focal length, and change from the start focal length to the end focal length according to the exposure time, and recording an image during the process of changing the focal length.

As an optional embodiment, the exposure time is determined according to the start focal length, the end focal length, and the focal length changing speed. For example, the exposure time may be an absolute value of a difference between the start focal length and the end focal length divided by the focal length changing speed. By implementing this embodiment, an appropriate exposure time can be calculated.

It can be seen that by implementing the method described in FIG. 5, the UAV can zoom automatically and record a burst image during the process of changing the focal length, which can simplify the difficulty of image capturing and improve the photographing precision. And recording burst images through the UAV can enrich photographing perspectives. For example, the UAV can record burst images from a bird's-eye view, which cannot be achieved with traditional cameras.

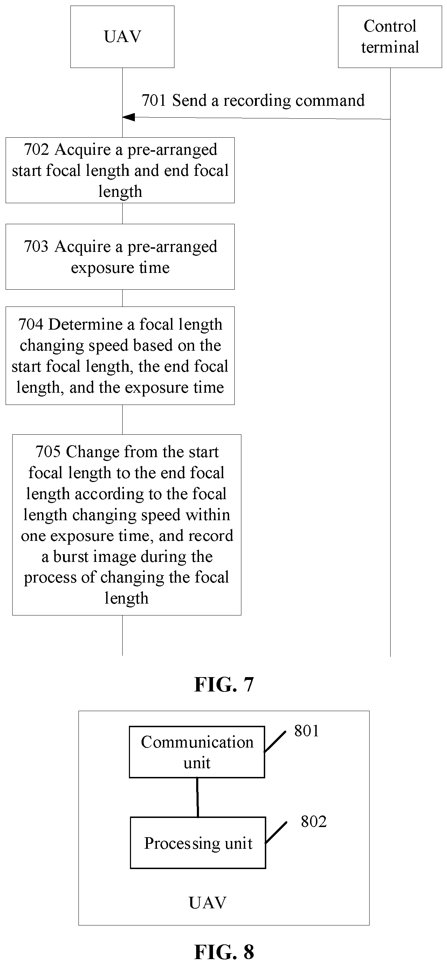

Please refer to FIG. 7, which is a schematic flowchart of another image capturing method disclosed in the embodiments of the present disclosure. As shown in FIG. 7, the image capturing method may include steps 701 to 705. In which:

In step 701, a control terminal sends a recording command to a UAV.

In step 702, the UAV acquires a pre-set start focal length and a pre-set end focal length.

Specifically, after receiving the recording command sent by the control terminal, the UAV acquires the pre-set start focal length and the pre-set end focal length.

In step 703, the UAV acquires a pre-set exposure time.

Specifically, after receiving the recording command sent by the control terminal, the UAV acquires the pre-set exposure time. In which, steps 702 and 703 are executed in no particular order. After the UAV receives the recording command sent by the control terminal, step 702 can be executed first, and then step 703 can be executed. Or step 703 can be executed first, then step 702 can be executed. Or steps 702 and 703 can be executed simultaneously.

Optionally, the exposure time can be a safe shutter time or less than the safe shutter time. The safe shutter time is usually 1/30s or 1/60s. If the exposure time is longer than the safe shutter time, it is easy to make an image blurry due to shaking of the UAV.

For how the UAV pre-sets the start focal length, the end focal length, and the exposure time, please refer to corresponding description of the foregoing method embodiments, which is not repeated here.

In step 704, a focal length changing speed is determined according to the start focal length, the end focal length, and the exposure time.

For example, the focal length changing speed may be an absolute value of a difference between the start focal length and the end focal length divided by the exposure time.

In step 705, the UAV changes from the start focal length to the end focal length according to the focal length changing speed within one exposure time, and records a burst image during the process of changing the focal length.

It can be seen that by implementing the method described in FIG. 7, the UAV can zoom automatically and record a burst image during the process of changing the focal length, which can simplify the difficulty of image capturing and improve the photographing precision. And recording burst images through the UAV can enrich photographing perspectives. For example, the UAV can record burst images from a bird's-eye view, which cannot be achieved with traditional cameras.

Please refer to FIG. 8, which is a schematic structural diagram of a UAV provided by the embodiments of the present disclosure. The UAV may at least include a communication unit 801 and a processing unit 802, in which:

The communication unit 801 is configured to receive a recording command sent by a control terminal; the processing unit 802 is configured to acquire a pre-set start focal length and a pre-set end focal length; and the processing unit 802 is also configured to change from the start focal length to the end focal length, and recording an image during the process of changing the focal length.

Optionally, the communication unit 801 is configured to receive the start focal length and the end focal length sent by the control terminal before receiving the recording command sent by the control terminal; and the processing unit 802 is also configured to set the start focal length and the end focal length.

Optionally, the processing unit 802 is further configured to acquire a pre-set focal length changing speed; and a manner that the processing unit 802 changes from the start focal length to the end focal length is changing from the start focal length to the end focal length according to the focal length changing speed.

Optionally, the communication unit 801 is further configured to receive the focal length changing speed sent by the control terminal before receiving the recording command sent by the control terminal; and the processing unit 802 is also configured to set the focal length changing speed.

Optionally, a specific manner that the processing unit 802 changes from the start focal length to the end focal length according to the focal length changing speed, and records an image during the process of changing the focal length is: changing from the start focal length to the end focal length according to the focal length changing speed within one exposure time, and recording a burst image during the process of changing the focal length.

Optionally, the exposure time is pre-set, or the exposure time is determined according to the start focal length, the end focal length, and the focal length changing speed.

Optionally, the processing unit 802 is further configured to acquire a pre-set exposure time before changing from the start focal length to the end focal length within the exposure time; and determine a focal length changing speed according to the start focal length, the end focal length, and the exposure time; and a specific manner that the processing unit 802 changes from the start focal length to the end focal length and records an image during the process of changing the focal length is: changing from the start focal length to the end focal length according to the focal length changing speed within one exposure time, and recording a burst image during the process of changing the focal length.

Optionally, the communication unit 801 is further configured to receive the exposure time sent by the control terminal before receiving the recording command sent by the control terminal; and the processing unit 802 is also configured to set the exposure time.

Optionally, a specific manner that the processing unit 802 records an image during the process of changing the focal length is: recording multiple images through multiple exposures during the process of changing the focal length, that the multiple images are used to generate a burst image.

Optionally, the processing unit 802 is further configured to rotate a gimbal carrying a camera before acquiring the pre-set start focal length and the pre-set end focal length, so that a framed object is in a middle position of a display screen of the control terminal.

Optionally, a focal length changing range from the start focal length to the end focal length is smaller than a maximum focal length changing range.

Optionally, the UAV is in a hovering state during the process of changing the focal length.

Optionally, the communication unit 801 is also configured to terminate a photographing task if a remote-control flight operation instruction for the UAV is received during the process of changing the focal length, and send a prompt message for prompting the termination of the photographing task to the control terminal.

Based on a same inventive concept, principles of the UAV provided in the embodiments of the present disclosure for solving problems are similar to the method embodiments of the present disclosure, so implementation of the UAV can refer to the implementation of the method, and beneficial effects of the UAV can refer to beneficial effects of the method, which will not be repeated here, to make the description concise.

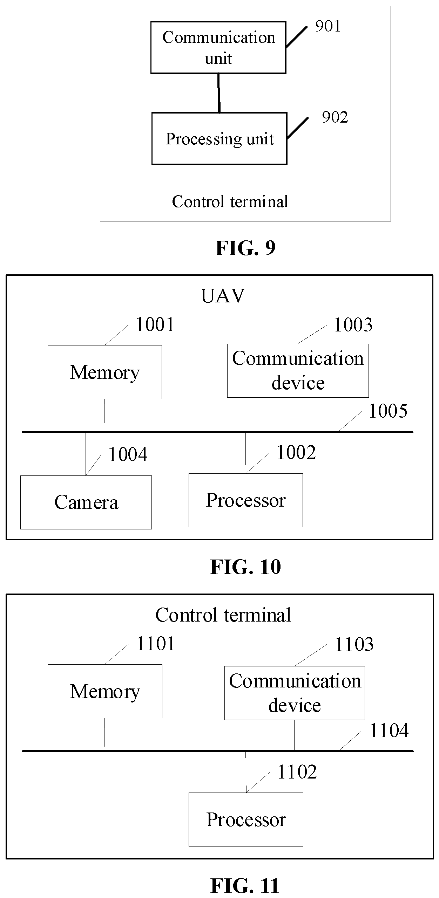

Please refer to FIG. 9, which is a schematic structural diagram of a control terminal provided by the embodiments of the present disclosure. The control terminal may at least include a communication unit 901 and a processing unit 902, in which:

The processing unit 902 is configured to acquire a start focal length to be set and an end focal length to be set; and the communication unit 901 is configured to send the start focal length and the end focal length to a UAV, so that the UAV can set the start focal length and end focal length.

Optionally, the processing unit 902 is also configured to acquire a focal length changing speed to be set; and the communication unit 901 is also configured to send the focal length changing speed to the UAV, so that the UAV can set the focal length changing speed.

Optionally, the processing unit 902 is also configured to acquire an exposure time to be set; and the communication unit 901 is also configured to send the exposure time to the UAV, so that the UAV can set the exposure time.

Optionally, a focal length changing range from the start focal length to the end focal length is smaller than a maximum focal length changing range.

Optionally, the communication unit 901 is also configured to send a remote-control flight operation instruction to the UAV when the UAV is in the process of changing the focal length; and the communication unit 901 is also configured to receive a prompt message of terminating a photographing task sent by the UAV.

Optionally, the communication unit 901 is further configured to receive multiple images sent by the UAV, that the multiple images are multiple images photographed by the UAV through multiple exposures during the process of changing the focal length; and the processing unit 902 is further configured to process the multiple images to obtain a burst image.

Based on a same inventive concept, principles of the control terminal provided by the embodiments of the present disclosure for solving problems are similar to the method embodiments of the present disclosure. Therefore, implementation of the control terminal can refer to the implementation of the method, and beneficial effects of the control terminal can refer to the beneficial effects of the method, which will not be repeated here, to make the description concise.

Please refer to FIG. 10, which is a schematic structural diagram of a UAV according to the embodiments of the present disclosure. As shown in FIG. 10, the UAV includes a memory 1001, a processor 1002, a communication device 1003, and a photographing device 1004. Optionally, the memory 1001, the processor 1002, the communication device 1003, and the photographing device 1004 may be connected through a bus system 1005.

The memory 1001 is configured to store program instructions. The memory 1001 may include a volatile memory, such as a random-access memory (RAM); the memory 1001 may also include a non-volatile memory, such as a flash memory, a solid-state drive (SSD), etc.; and the memory 1001 may also include a combination of the foregoing types of memories.

The processor 1002 may include a central processing unit (CPU). The processor 1002 may further include a hardware chip. The aforementioned hardware chip may be an application-specific integrated circuit (ASIC), a programmable logic device (PLD), etc. The above-mentioned PLD may be a field-programmable gate array (FPGA), a general array logic (GAL), etc. In which, the processor 1002 calls the program instructions in the memory 1001 to execute following steps:
receiving a recording command sent by a control terminal through the communication device 1003;
acquiring a pre-set start focal length and a pre-set end focal length; and
changing from the start focal length to the end focal length, and recording an image by the photographing device 1004 during the process of changing the focal length.

Optionally, the processor 1002 calling the program instructions is also configured to:
before receiving the recording command sent by the control terminal through the communication device 1003, receive the start focal length and the end focal length sent by the control terminal through the communication device 1003; and
set the start focal length and the end focal length.

Optionally, the processor 1002 calling the program instructions is also configured to:
acquire a pre-set focal length changing speed.

A specific manner that the processor 1002 changes from the start focal length to the end focal length is as follows:
changing from the start focal length to the end focal length according to the focal length changing speed.

Optionally, the processor 1002 calling the program instructions is also configured to:
before receiving the recording command sent by the control terminal through the communication device 1003, receive the focal length changing speed sent by the control terminal through the communication device 1003; and
set the focal length changing speed.

Optionally, a specific manner that the processor 1002 changes from the start focal length to the end focal length according to the focal length changing speed, and records an image during the process of changing the focal length is:
changing from the start focal length to the end focal length according to the focal length changing speed within one exposure time, and recording a burst image by the photographing device 1004 during the process of changing the focal length.

Optionally, the exposure time is pre-set, or the exposure time is determined according to the start focal length, the end focal length, and the focal length changing speed.

Optionally, the processor 1002 calling the program instructions is also configured to:
acquire a pre-set exposure time before changing from the start focal length to the end focal length within the exposure time; and
determine a focal length changing speed according to the start focal length, the end focal length, and the exposure time.

A specific manner that the processor 1002 changes from the start focal length to the end focal length, and records an image by the photographing device 1004 during the process of changing the focal length is as follows:
changing from the start focal length to the end focal length according to the focal length changing speed within one exposure time, and recording a burst image by the photographing device 1004 during the process of changing the focal length.

Optionally, the processor 1002 calling the program instructions is also configured to:
before receiving the recording command sent by the control terminal through the communication device 1003, receive the exposure time sent by the control terminal through the communication device 1003; and
set the exposure time.

Optionally, a specific manner that the processor 1002 records an image through the photographing device 1004 during the process of changing the focal length is:
recording multiple images through multiple exposures in the process of changing the focal length by the photographing device 1004, that the multiple images are used to generate a burst image.

Optionally, the processor 1002 calling the program instructions is also configured to:
before acquiring the pre-set start focal length and the pre-set end focal length, rotate a gimbal carrying a camera so that a framed object is in a middle position of a display screen of the control terminal.

Optionally, a focal length changing range from the start focal length to the end focal length is smaller than a maximum focal length changing range.

Optionally, the UAV is in a hovering state during the process of changing the focal length.

Optionally, the processor 1002 calling the program instructions is also configured to:
during the process of changing the focal length, if a remote-control flight operation instruction for the UAV is received, terminate a photographing task, and send a prompt message for prompting the termination of the photographing task to the control terminal.

Based on a same inventive concept, principles of the UAV provided by the embodiments of the present disclosure for solving problems are similar to the method embodiments of the present disclosure, so implementation of the UAV can refer to the implementation of the method, and beneficial effects of the UAV can refer to the benefits of the method, which will not be repeated here, to make the description concise.

Please refer to FIG. 11, which is a schematic structural diagram of a control terminal provided by the embodiments of the present disclosure. As shown in FIG. 11, the control terminal includes a memory 1101, a processor 1102, and a communication device 1103. Optionally, the memory 1101, the processor 1102, and the communication device 1103 may be connected through a bus system 1104.

The memory 1101 is configured to store program instructions. The memory 1101 may include a volatile memory, such as a random-access memory (RAM); the memory 1101 may also include a non-volatile memory, such as a flash memory, a solid-state drive (SSD), etc.; and the memory 1101 may also include a combination of the foregoing types of memories.

The processor 1102 may include a central processing unit (CPU). The processor 1102 may further include a hardware chip. The aforementioned hardware chip may be an application-specific integrated circuit (ASIC), a programmable logic device (PLD), etc. The above-mentioned PLD may be a field-programmable gate array (FPGA), a general array logic (GAL), etc. In which, the processor 1102 calls the program instructions in the memory 1101 to execute following steps:
acquiring a start focal length to be set and an end focal length to be set; and
sending the start focal length and the end focal length to a UAV through the communication device 1103, so that the UAV can set the start focal length and the end focal length.

Optionally, the processor 1102 calling the program instructions is also configured to:
acquire a focal length changing speed to be set; and
send the focal length changing speed to the UAV through the communication device 1103, so that the UAV can set the focal length changing speed.

Optionally, the processor 1102 calling the program instructions is also configured to:
acquire an exposure time to be set; and
send the exposure time to the UAV through the communication device 1103, so that the UAV can set the exposure time.

Optionally, a focal length changing range from the start focal length to the end focal length is smaller than a maximum focal length changing range.

Optionally, the processor 1102 calling the program instructions is also configured to:
when the UAV is in the process of changing the focal length, send a remote-control flight operation instruction to the UAV through the communication device 1103; and
receive a prompt message sent by the UAV for prompting a termination of a photographing task through the communication device 1103.

The processor 1102 calling the program instructions is also configured to:
receive multiple images sent by the UAV through the communication device 1103, that the multiple images are multiple images photographed by the UAV through multiple exposures during the process of changing the focal length; and
process the multiple images to obtain a burst image.

Based on a same inventive concept, principles of the control terminal provided by the embodiments of the present disclosure for solving problems are similar to the method embodiments of the present disclosure. Therefore, implementation of the control terminal can refer to the implementation of the method, and beneficial effects of the control terminal can refer to the beneficial effects of the method, which will not be repeated here, to make the description concise.

In the above-mentioned embodiments, description of each embodiment has its own emphasis. For parts that are not described in detail in one embodiment, reference may be made to related descriptions of other embodiments.

Those skilled in the art should be aware that, in one or more of the above examples, functions described in the present disclosure can be implemented by a hardware, a software, a firmware or any combination thereof. When implemented by a software, these functions can be stored in a computer-readable medium or transmitted as one or more instructions or codes on the computer-readable medium. The computer-readable medium includes a computer storage medium and a communication medium, that the communication medium includes any medium that facilitates transfer of computer programs from one place to another. The storage medium may be any available medium that can be accessed by a general-purpose or special-purpose computer.

The specific embodiments described above further describe the objective, the technical solutions, and the beneficial effects of the present disclosure in further detail. It should be understood that the above described are only specific embodiments of the present disclosure and are not intended to limit the protection scope of the present disclosure. Any modification, equivalent replacement, improvement, etc., made on the basis of the technical solutions of the present disclosure shall be included in the protection scope of the present disclosure.

## Claims

1. An image capturing method, **characterized in that**, being applied to an unmanned aerial vehicle (UAV), the method comprising:
receiving a recording command sent by a control terminal;
acquiring a pre-set start focal length and a pre-set end focal length; and
changing from the start focal length to the end focal length, and recording an image during the process of changing focal lengths.

2. The method according to claim 1, wherein before receiving the recording command sent by the control terminal, the method further comprises:
receiving the start focal length and the end focal length sent by the control terminal; and
setting the start focal length and the end focal length.

3. The method according to claims 1 or 2, wherein the method further comprises:
acquiring a pre-set focal length changing speed; and
the changing from the start focal length to the end focal length further comprising changing from the start focal length to the end focal length according to the focal length changing speed.

4. The method according to claim 3, wherein before receiving the recording command sent by the control terminal, the method further comprises:
receiving the focal length changing speed sent by the control terminal; and
setting the focal length changing speed.

5. The method according to claims 3 or 4, wherein changing from the start focal length to the end focal length according to the focal length changing speed, and recording the image during the process of changing the focal length comprises:
according to the focal length changing speed within one exposure time, changing from the start focal length to the end focal length, and recording a burst image during the process of changing the focal length.

6. The method according to claim 5, wherein the exposure time is pre-set, or the exposure time is determined according to the start focal length, the end focal length, and the focal length changing speed.

7. The method according to claims 1 or 2, wherein before changing from the start focal length to the end focal length within the exposure time, the method further comprises:
acquiring the pre-set exposure time; and
determining the focal length changing speed according to the start focal length, the end focal length, and the exposure time; and
wherein changing from the start focal length to the end focal length, and recording the image during the process of changing the focal lengths comprises:
according to the focal length changing speed within the exposure time, changing from the start focal length to the end focal length, and recording a burst image during the process of changing the focal length.

8. The method according to claims 6 or 7, wherein before receiving the recording command sent by the control terminal, the method further comprises:
receiving the exposure time sent by the control terminal; and
setting the exposure time.

9. The method according to any one of claims 1 to 4, wherein recording the image during the process of changing the focal length comprises:
recording multiple images through multiple exposures during the process of changing the focal length, wherein the multiple images are used to generate a burst image.

10. The method according to any one of claims 1 to 9, wherein before acquiring the pre-set start focal length and the pre-set end focal length, the method further comprises:
rotating a gimbal carrying a camera, so that a framed object is in a middle position of a display screen of the control terminal.

11. The method according to any one of claims 1 to 10, wherein a focal length changing range from the start focal length to the end focal length is smaller than a maximum focal length changing range.

12. The method according to any one of claims 1 to 11, wherein the UAV is in a hovering state during the process of changing the focal lengths.

13. The method according to any one of claims 1 to 12, wherein the method further includes:
during the process of changing the focal length, if a remote-control flight operation instruction for the UAV is received, terminating a photographing task, and sending a prompt message for prompting the termination of the photographing task to the control terminal.

14. An information setting method, **characterized in that**, being applied to a control terminal, the method includes:
acquiring a start focal length to be set and an end focal length to be set; and
sending the start focal length and the end focal length to a UAV, so that the UAV sets the start focal length and the end focal length.

15. The method according to claim 14, wherein the method further comprises:
acquiring a focal length changing speed to be set; and
sending the focal length changing speed to the UAV, so that the UAV sets the focal length changing speed.

16. The method according to claims 14 or 15, wherein the method further comprises:
acquiring an exposure time to be set; and
sending the exposure time to the UAV, so that the UAV sets the exposure time.

17. The method according to any one of claims 14 to 16, wherein a focal length changing range from the start focal length to the end focal length is smaller than a maximum focal length changing range.

18. The method according to any one of claims 14-17, wherein the method further includes:
sending a remote-control flight operation instruction to the UAV while the UAV is in the process of changing the focal lengths; and
receiving a prompt message sent by the UAV for prompting a termination of a photographing task.

19. The method according to any one of claims 14 to 18, wherein the method further comprises:
receiving multiple images sent by the UAV, wherein the multiple images are multiple images photographed by the UAV through multiple exposures when the UAV is in the process of changing the focal length; and
processing the multiple images to obtain a burst image.

20. An unmanned aerial vehicle (UAV), **characterized in that**, the UAV including a memory, a processor, a communication device, and a photographing device, wherein:
the memory is configured to store program instructions;
the processor calls the program instructions for:
receiving a recording command sent by a control terminal through the communication device;
acquiring a pre-set start focal length and a pre-set end focal length; and
changing the start focal length to the end focal length, and recording an image through the photographing device during the process of changing focal lengths.

21. The UAV according to claim 20, wherein the processor further calls the program instructions for:
before receiving the recording command sent by the control terminal through the communication device, receiving the start focal length and the end focal length sent by the control terminal through the communication device; and
setting the start focal length and the end focal length.

22. The UAV according to claim 20 or 21, wherein the processor further calls the program instructions for:
acquiring a pre-set focal length changing speed, and
wherein the processor changing from the start focal length to the end focal length further comprises:
changing from the start focal length to the end focal length according to the focal length changing speed.

23. The UAV according to claim 22, wherein the processor further calls the program instructions for:
before receiving the recording command sent by the control terminal through the communication device, receiving the focal length changing speed sent by the control terminal through the communication device; and
arranging the focal length changing speed.

24. The UAV according to claim 22 or 23, wherein the processor changing from the start focal length to the end focal length according to the focal length changing speed, and recording the image through the photographing device during the process of changing the focal length comprises:
changing from the start focal length to the end focal length according to the focal length changing speed within one exposure time, and recording a burst image through the photographing device during the process of changing the focal lengths.

25. The UAV according to claim 24, wherein the exposure time is pre-set, or the exposure time is determined according to the start focal length, the end focal length, and the focal length changing speed.

26. The UAV according to claim 20 or 21, wherein the processor further calls the program instructions for:
acquiring a pre-set exposure time before changing from the start focal length to the end focal length within the exposure time, and
determining the focal length changing speed according to the start focal length, the end focal length, and the exposure time; and
wherein the processor changing from the start focal length to the end focal length, and recording the image through the photographing device during the process of changing the focal lengths comprises:
changing from the start focal length to the end focal length according to the focal length changing speed within one exposure time, and photographing the burst image through the photographing device during the process of changing the focal length.

27. The UAV according to claim 25 or 26, wherein the processor further calls the program instructions for:
before receiving the recording command sent by the control terminal through the communication device, receiving the exposure time sent by the control terminal through the communication device; and
setting the exposure time.

28. The UAV according to any one of claims 20 to 23, wherein the processor recording the image through the photographing device during the process of changing the focal lengths comprises:
recording multiple images through multiple exposures in the process of changing the focal length through the photographing device, the multiple images being used to generate the burst image.

29. The UAV according to any one of claims 20 to 28, wherein the processor further calls the program instructions for:
before acquiring the pre-set start focal length and the pre-set end focal length, rotating a gimbal carrying a camera so that a framed object is in a middle position of a display screen of the control terminal.

30. The UAV according to any one of claims 20-29, wherein a focal length changing range from the start focal length to the end focal length is smaller than a maximum focal length changing range.

31. The UAV according to any one of claims 20 to 30, wherein the UAV is in a hovering state during the process of changing the focal length.

32. The UAV according to any one of claims 20 to 31, wherein the processor further calls the program instructions for:
during the process of changing the focal length, if a remote-control flight operation instruction for the UAV is received, terminating a photographing task, and send a prompt message for prompting the termination of the photographing task to the control terminal.

33. A control terminal, **characterized in that**, the control terminal including a memory, a processor, and a communication device, wherein:
the memory is configured to store program instructions;
the processor calls the program instructions for:
acquiring a start focal length to be set and an end focal length to be set; and
sending the start focal length and the end focal length to an unmanned aerial vehicle (UAV) through the communication device, the UAV setting the start focal length and the end focal length.

34. The control terminal according to claim 33, wherein the processor further calls the program instructions for:
acquiring a focal length changing speed to be set; and
sending the focal length changing speed to the UAV through the communication device, the UAV setting the focal length changing speed.

35. The control terminal according to claim 33 or 34, wherein the processor further calls the program instructions for:
acquiring an exposure time to be set; and
sending the exposure time to the UAV through the communication device, the UAV setting the exposure time.

36. The control terminal according to any one of claims 33 to 35, wherein a focal length changing range from the start focal length to the end focal length is smaller than a maximum focal length changing range.

37. The control terminal according to any one of claims 33 to 36, wherein the processor further calls the program instructions for:
when the UAV is in the process of changing the focal length, sending a remote-control flight operation instruction to the UAV through the communication device; and
receiving a prompt message sent by the UAV for prompting a termination of a photographing task through the communication device.

38. The control terminal according to any one of claims 33 to 36, wherein the processor further calls the program instructions for:
receiving multiple images sent by the UAV through the communication device, the multiple images being multiple images photographed by the UAV through multiple exposures during the process of changing the focal lengths; and
processing the multiple images to obtain a burst image.
